# EUROPEAN PATENT SPECIFICATION

(11) **EP 1 305 969 B1**
(45) Date of publication and mention of the grant of the patent: **09.09.2015**
(21) Application number: 01954127.5
(22) Date of filing: 31.07.2001
(51) Int. Cl.: H04L 9/32, H04L 12/58, H04L 29/06, H04W 12/06

(54) **AUTHENTICATION IN A MOBILE COMMUNICATIONS NETWORK**
AUTHENTIFIZIERUNG IN EINEM MOBILEN KOMMUNIKATIONSNETZWERK
AUTHENTIFICATION DANS UN RÉSEAU DE TÉLÉCOMMUNICATIONS MOBILE

(30) Priority: 03.08.2000 GB 0019110
(43) Date of publication of application: 02.05.2003
(60) Divisional application: 10181441.6
(73) Proprietor: Orange, 75015 Paris (FR)
(72) Inventor: GREEN, Mark Raymond, Weston-Super-Mare, N. Somerset BS24 9XB (GB); HAYSOM, Timothy John, Portishead, North Somerset (GB); HOOKER, Philip, Bath BA1 7AA (GB)
(74) Representative: Thiel, Frédéric
(86) International application number: PCT/GB2001/003423
(87) International publication number: WO 2002/013568

(56) References cited:
- EP-A- 0 915 630
- EP-A- 1 005 244
- WO-A-00/24218
- DE-A- 19 820 422
- FR-A- 2 785 119
- US-A- 5 390 245

## Description

This invention relates to a method of authentication, in particular, but not exclusively, in a mobile communications network.

In a known conventional GSM (Global System for Mobile Communications) system, each mobile station, such as a mobile telephone handset, is provided with a SIM, which is inserted into the mobile station in order to allow the mobile station to receive service in a GSM network.

A typical SIM includes a microprocessor, memory elements including a permanent memory (e.g. ROM), a non-volatile rewritable memory (e.g. EEPROM) and a volatile rewritable memory (e.g. RAM), and contacts for forming the data transfer interface between the SIM and the mobile station.

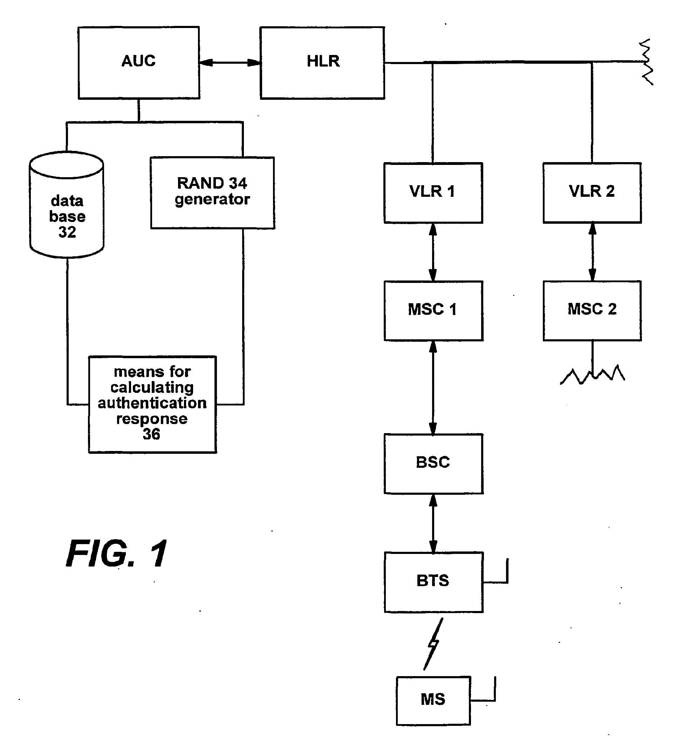

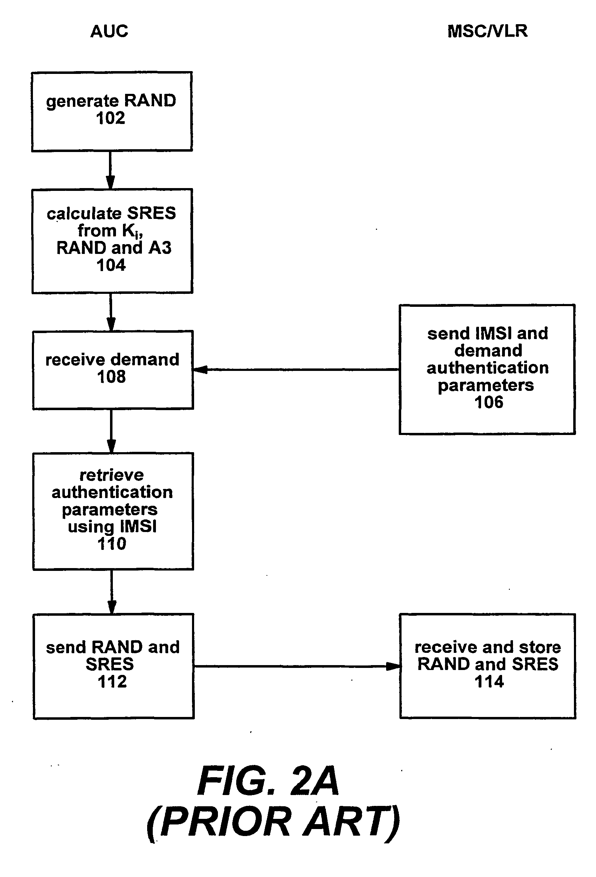

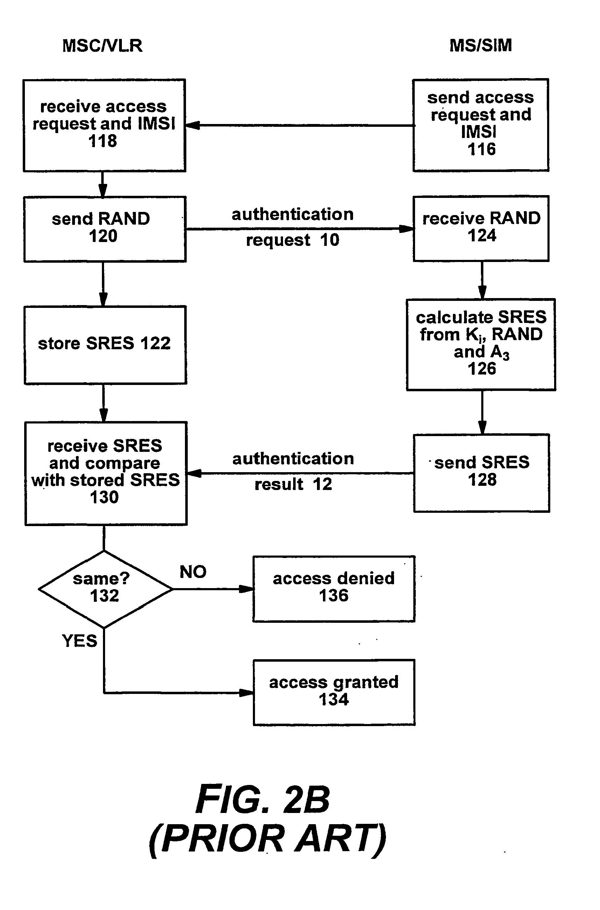

In the following it is referred to Fig. 1, 2A and 2B. The basic structure of a GSM system is shown in Fig. 1. The GSM standard also specifies the process of authenticating the user to the network. This process is illustrated in Fig. 2.

Referring now to Fig. 1, there is a home location register (HLR) storing information of all the subscribers to a network. The subscriber data contain information of the services to which the subscriber may have access and the current location of the subscriber. Connected to the HLR are a number of visitor location registers VLR1, VLR2, etc. Each VLR is attached to or integrated in a mobile switching centre MSC. The MSC is connected to a base station controller (BSC). The BSC serves a number of cells, each having a transceiver station (BTS). The BTS communicates with a mobile station (MS) via radio connections. An authentication centre AuC is connected to the HLR. The AuC handles the authentication of the subscriber to the network as will be explained in the following.

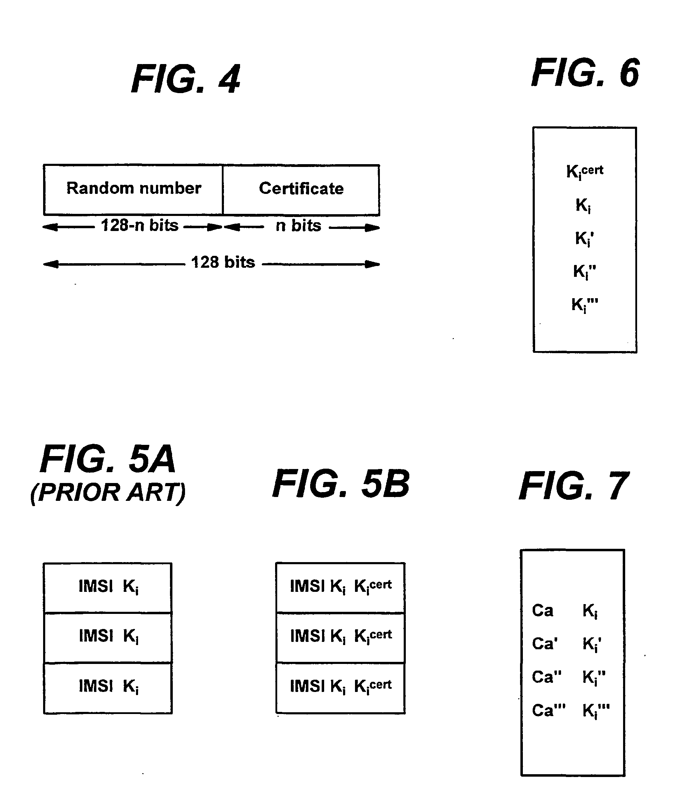

Referring now to Fig. 2A and Fig. 1, the visited Mobile Service Switching Centre (MSC)/Visitors Location Register (VLR) sends parameters including the International Mobile Subscriber Identity (IMSI) to the Authentication Centre (AuC) and demands authentication parameters (step 106). The authentication centre is linked to a Home Location Register (HLR) of the subscriber. When a subscription is started, a secret number called an authentication key (Kᵢ) is allocated to the mobile subscriber together with the IMSI. The AuC comprises a database 32 which stores the authentication key Kᵢ for each mobile subscriber in the GSM network as is illustrated in Fig. 5A. The key Kᵢ is unique to the subscriber. It is shared only by the subscriber's SIM card and the authentication centre which serves the subscriber's home network. The key Kᵢ is stored on the SIM in a very protected way: it is not possible to retrieve the key Kᵢ from the SIM. The Kᵢ of the mobile subscriber can be retrieved from database 32 using the IMSI of the subscriber as an index. The AuC is further provided with means for calculating authentication responses 36 including an authentication algorithm A₃. The GSM system further specifies the size of the random input parameter RAND (128 bits) and of the output parameter SRES (32 bits). Kᵢ may have any format and length. The authentication algorithm A₃ is provided by the network operator and kept secret. A random generator 34 provides random numbers RAND having length of 128 bits (step 102). The key Kᵢ retrieved from database 32 and the random number RAND are used as input parameters in the authentication algorithm A₃ to calculate the signed response SRES (step 104). Authentication algorithm A₃ is a so-called one-way hash function. This ensures that the computation of the authentication response SRES (signed response) from the key Kᵢ and the random number RAND is easy, whereas the computation of the key Kᵢ knowing RAND and the authentication response SRES is as complex as possible. Even with the knowledge of several pairs of authentication challenges and responses (RAND, SRES) pertaining to the same subscriber, the computation remain highly complex. At the same time a ciphering key K_{c} is calculated using authentication key Kᵢ and random number RAND as input parameters in a ciphering algorithm A₈. The triplet comprising the random number RAND, the signed response SRES and the ciphering key K_{c} are sent from the AuC to the visited MSC/VLR in step 112. Such a triplet is used only once, i.e. for one communication and is then destroyed. Several triplets are calculated in advance for each subscriber at authentication centre AuC and are delivered to the MSC/VLR on request. Such a request contains the IMSI of subscriber and a demand for authentication parameters (step 106). The IMSI is used to retrieve parameters pertaining to the subscriber (step 110), and a number of triplets are transmitted from the authentication centre AuC to the visited MSC/VLR (step 112). A reserve of a few of the triplets are stored in the MSC/VLR (step 114). Referring now to Fig. 2B, upon access request of a mobile station (MS) in step 116 and 118 a triplet is retrieved from storage in the MSCNLR using the IMSI. The value of SRES is stored in the MSC/VLR in step 122. The random number RAND is further transmitted from the MSC/VLR to the Mobile Station MS as a request for authentication (10) of the subscriber to the network in step 120 and 124. The SIM stores a copy of the key Kᵢ of the subscriber and the authentication algorithm A₃ for calculating the signed response SRES for verification.

The response SRES is accordingly calculated using Kᵢ and RAND as an input for authentication algorithm A₃ (step 126) and the response is transmitted in step 128 to the MSC/VLR as an authentication result (12). The MSC/VLR then compares the signed response SRES transmitted from the AuC and already stored in the MSC/VLR with the signed response SRES transmitted from the mobile station as an authentication result 12 in steps 130 and 132. If the two values for SRES are identical, access of the subscriber to the network is granted by the MSC/VLR in step 134. If the two values are not identical, access is denied in step 136.

However, the system described above is open to various attacks to gain access to the secret key Kᵢ. By repeatingly sending random numbers RAND as authentication challenges to the SIM and by monitoring the signed responses SRES the SIM will provide, it might be possible to derive the value of the secret key Kᵢ and possibly also the authentication algorithm A₃. This is called a multiple attack. Although the use of a one-way hash function for A₃ ensures a considerable level of complexity of the computation, the secret key Kᵢ may be discovered with a finite number of attacks. With the knowledge of both the secret Kᵢ and the authentication algorithm A₃ one or more clone SIM cards may be generated.

European patent application EP 1 005 244 describes a method of authenticating a connection between a user terminal and a network, in which an authorised authentication station issues an authentication challenge to the user terminal including verification information in the authentication challenge to indicate to the user terminal that the challenge originates from the authorised station.

It is an object of the present invention to provide a better, more secure, mechanism for authenticating the subscriber to the network. It is a further object of the present invention to nullify potential multiple attacks and the attempts to derive the value of the secret authentication key Kᵢ and thus to prevent or further reduce the production of clone SIM cards.

According to one aspect of the present invention, there is provided a method of authentication in a mobile communications network comprising: authentication of a subscriber identifying means to a network entity; and authentication of the network entity to the subscriber identifying means, wherein the subscriber identifying means receives an authentication challenge from the network entity; wherein the subscriber identifying means distinguishes authorised authentication challenges from unauthorised authentication challenges; characterised in that a response to both said authorised and said unauthorised authentication challenges is given by the subscriber identifying means.

Preferably, mutual authentication is achieved by authorising the authentication challenge from the network entity with a certificate, thus authenticating the network entity to the subscriber identifying means.

Preferably, a true authentication response to said authentication challenge is only given to a request carrying a valid certificate. Thus a disclosure of a secret authentication key following multiple attacks may be prevented. Preferably, said certificate includes a digital signature, a message authentication code (MAC) or a redundancy check code.

Preferably, the procedure of responding to said authentication challenge is the same for an authorised and an unauthorised authentication challenge and a first input parameter or algorithm is used for said procedure of responding to an authorised challenge and at least one further input parameter or algorithm, different from said first input parameter or algorithm, is used for said procedure of responding to an unauthorised challenge.

Thus the same procedure is applied to respond to valid and invalid authentication challenges. Even if the multiple attacks of the subscriber identifying means are performed with help of a card reader no differences in the procedure to response to valid and invalid request could be detected. In this way a potential attacker would not be alerted that the attack is being nullified. This reduces further the chance for a potential attacker to discover a secret authentication key.

Preferably, data are stored on said subscriber identifying means indicating that said subscriber identifying means has been subject to a request for authentication with an invalid certificate.

In this way the network may have access to the information that an attempt has been made to challenge the subscriber identifying means in an unauthorised way and precautionary steps may be undertaken to prevent any further attempts.

According to an embodiment of the present invention, the method comprises the steps of: receiving a message comprising said authentication challenge and determining a characteristic of said message, calculating said authentication response based on said authentication challenge, an authentication input parameter and an authentication algorithm; retrieving one authentication input parameter from a number of input parameters stored on said subscriber identifying means or one authentication algorithm from a number of algorithms stored on said subscriber identifying means in response to said characteristic; and responding to said authentication challenge by using said retrieved authentication input parameter or algorithm.

This provides ways to prevent disclosure of a secret authentication key and thus to prevent cloning of the subscriber identifying means.

Preferably, a sequence of messages comprising said authentication challenge and said certificate or authentication code has the appearance of randomness.

For authentication in a mobile communications network in accordance with the GSM standard, said authentication challenge preferably comprises a message of (128-n) bits and said certificate or authentication code comprises a message of n bits, such that a message comprising said authentication challenge and said certificate or authentication code is 128 bits long.

In this way a potential attacker may not recognise that the authentication challenges carries a certificate or authentication code. This helps further to nullify the attack because the message containing the authentication challenge RAND together with the certificate or authentication code has the same format and length than an authentication challenge according to the conventional GSM standard.

According to an embodiment of the present invention, the subscriber identifying means is a subscriber identity module.

According to another aspect of the present invention, there is provided apparatus comprising a subscriber identifying means adapted to:
receive an authentication challenge from a network entity in a mobile communications network; and
distinguish authorised authentication challenges from unauthorised authentication challenges,
characterised in that:
   the apparatus is adapted to give a response to both said authorised and said unauthorised authentication challenges.

By responding differently to authorised and unauthorised authentication challenges the chance for discovering a secret authentication input parameter in a multiple attack is substantially reduced.

Preferably said authentication requests comprising authentication challenges carry certificates for authorising said authentication challenges and the validity of said certificates can be checked by calculation of said certificates from a certifying key and certifying algorithm stored on said information storage means using said authentication challenges as input parameters and comparison of calculated and received certificates.

In this way the same procedures and methods are used for authorising said authentication challenge itself. Only minor modifications have to be applied to the subscriber identifying means and known technology may be used.

Preferably said information storage means adapted for storing a first authentication input parameter or algorithm for use in a procedure of responding to authorised requests for authentication and further adapted for storing at least another authentication input parameter or algorithm for use in a procedure of responding to unauthorised requests.

In this way the same procedure is used for calculating the response to a valid and an invalid authentication challenge and therefore no possibility for a potential attacker is provided to distinguish an authentication challenge with valid certificate from one with an invalid certificate.

According to an embodiment of the present invention, the information storage means comprises: means for calculating authentication responses to received authentication challenges using said challenges, an authentication input parameter and an authentication algorithm stored on said information storage means; means for: i) determining characteristics of said authentication challenges; or ii) determining characteristics of received authentication codes; means for storing: i) an authentication algorithm and at least two secret authentication input parameters; or ii) a secret authentication input parameters and at least two authentication algorithms means for determining predetermined assignments of said characteristics to said at least two authentication input parameters or algorithms; and means for retrieving the assigned authentication input parameters or algorithms for a particular characteristic or authentication code and using said assigned authentication input parameter or algorithm for calculating said authentication responses.

In this way the possibility of the detection of a secret authentication key or keys is reduced.

Preferably in a mobile communications network according to the GSM standard, a received message comprising said authentication challenge and said certificate or authentication code has the same appearance as an authentication challenge according to the GSM standard.

In this way a potential attacker may not distinguish an authorised authentication challenge according to these embodiments of the present invention from an authentication challenge according to the conventional GSM standard and the potential attacker would not be alerted that the attack is nullified.

According to an embodiment of the present invention, there is provided a subscriber identifying means for authentication in a mobile communications network, adapted for distinguishing an authorised authentication challenge as transmitted by said network from an unauthorised authentication challenge, characterised in that said subscriber identifying means is further adapted for storing data indicating that said subscriber identifying means has been subject to unauthorised authentication challenges.

In this way an unauthorised authentication challenge by a potential attacker is detected and the network may be notified of the false attack and actions to prevent further attacks or misuse may be started.

According to another aspect of the present invention, there is provided a subscriber identifying means for authentication in a mobile communications network, adapted for distinguishing a genuine authentication challenge as transmitted by said network from a false authentication challenge and for storing data indicating that said subscriber identifying means has been subject to false authentication challenges.

In this way a false authentication challenge by a potential attacker is detected and the network may be notified of the false attack and actions to prevent further attacks or misuse may be started.

According to yet another aspect of the present invention, there is provided a method of authentication in a mobile communications network, comprising transmitting an authentication request to a mobile station and receiving an authentication response from the mobile station, wherein the authentication request transmitted to the mobile station comprises:
an authentication challenge; and
a certificate, said certificate providing authentication of a network entity to or an authentication code for determining a procedure for responding to said authentication challenge.

According to a further aspect of the invention there is provided a method of authentication in a mobile communications network,
wherein a network entity transmits an authentication challenge to a subscriber identifying means and generates an authentication response to said challenge,
wherein said subscriber identifying means generates an authentication response to said received challenge and transmitting said response to said network entity,
wherein said network entity compares the authentication response generated by said network entity to the authentication response provided by said subscriber identifying means, and
wherein said method comprises the steps of generating said authentication responses using a variable external input parameter available to said network entity and said subscriber identifying means and calculating said authentication response in response thereto.

Further aspects and advantages of the invention will be apparent from the following, in which one embodiment of the invention will now be described, by way of example only, with reference to the accompanying drawings in which:
Figure 1 is a general outline of the structure of a mobile communications network;
Figure 2A is a flowchart diagram showing the steps between the authentication centre AuC and the visited MSC/VLR in the authentication procedure according to the GSM standard (prior art);
Figure 2B is a flowchart diagram showing the steps between the visited MSC/VLR and the mobile station including the SIM card in the authentication procedure according to the GSM standard (prior art);
Figure 3A is a flowchart diagram showing the steps between the authentication centre AuC and the visited MSC/VLR in the mutual authentication procedure according to one embodiment of the present invention;
Figures 3B and 3C are flowchart diagrams showing the steps between the authentication centre AuC and, the mobile station including the SIM card in the mutual authentication procedure according to one embodiment of the present invention;
Figure 4 is an outline of the random number RAND and the certificate according to one embodiment of the present invention;
Figure 5A shows the database content for retrieving the authentication key in the authentication centre AuC (prior art);
Figure 5B shows the database content for retrieving the authentication key and the certifying key in the authentication centre AuC according to one embodiment of the present invention;
Figure 6 shows the storing of the certifying key and of different authentication keys in the SIM for use to response to authorised and unauthorised authentication challenges according to one embodiment of the present invention;
Figure 7 shows the storing of authentication codes and of authentication keys and their assignment in the SIM for use to respond to authentication requests comprising an authentication challenge and an authentication code according to a second embodiment of the present invention.

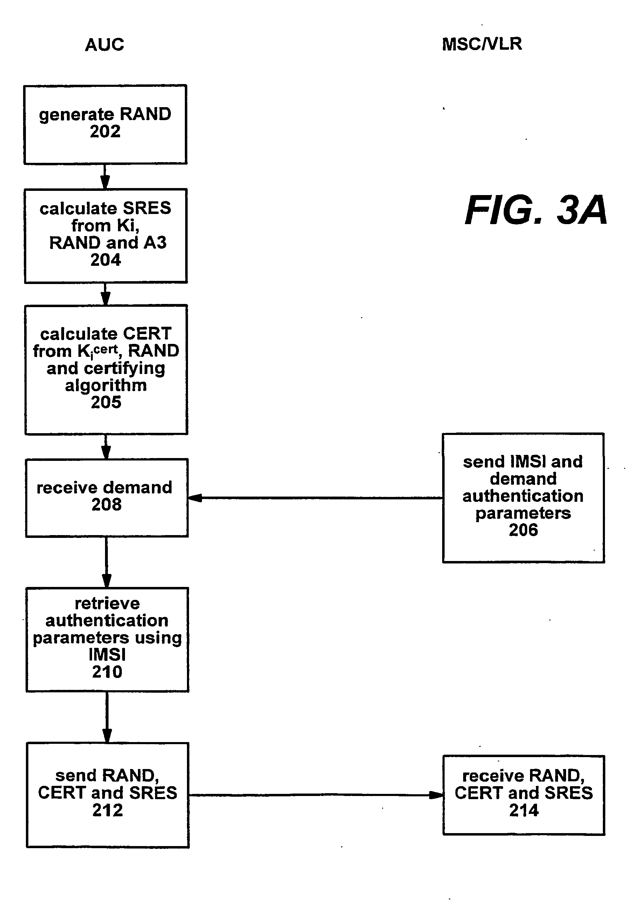

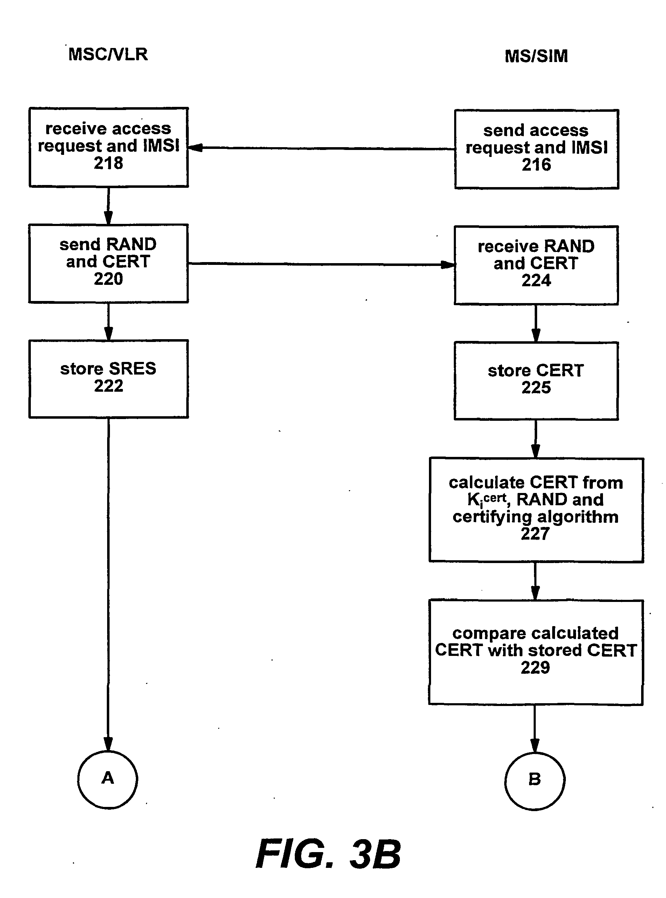

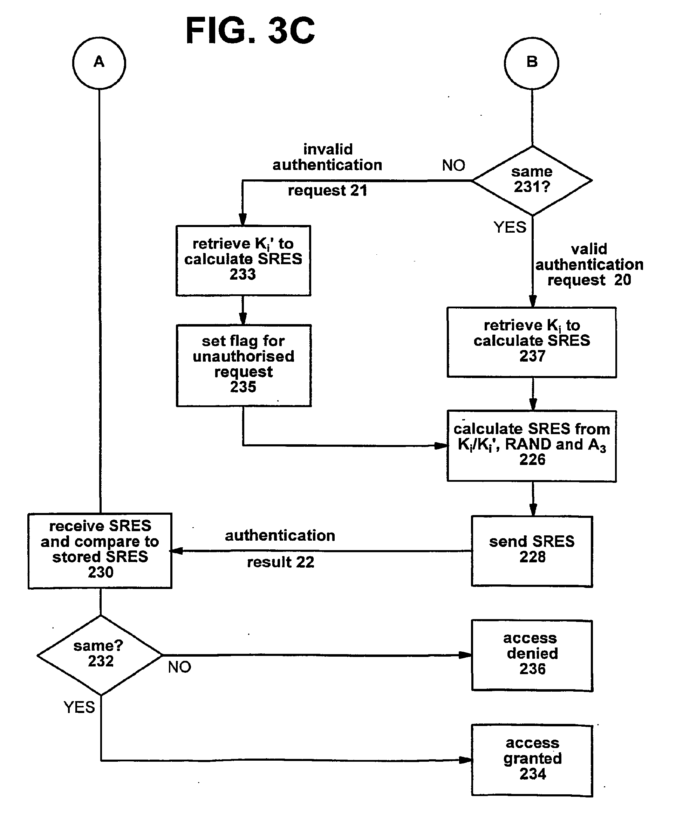

Figures 3A, B and C show the procedure of mutual authentication according to one embodiment of the present invention. Referring now to Fig. 3A, the steps of sending a demand of authentication parameters and the IMSI from the MSC/VLR to the authentication centre AuC (step 206) and step 202 and 204 of generating RAND and calculating authentication response are similar as steps 102, 104, 106 shown in Figure 2A and described above. However, the random number RAND used in this embodiment of the present invention is shorter than 128 bits. At subscription time, a second secret number called a certifying key Kᵢ^{cert} is allocated to the subscriber, together with the IMSI and the authentication key Kᵢ. The certificate key Kᵢ^{cert} is stored in database 32 and can be retrieved together with Kᵢ with IMSI as an index. Authentication algorithm A₃ is used to calculate SRES from RAND and Kᵢ in step 204. A certifying algorithm is used to calculate a certificate CERT from RAND and Kᵢ^{cert} in step 205. RAND, CERT and SRES are transmitted from authentication centre AuC to MSC/VLR on demand in step 212 and 214. Referring now to Fig. 3B, upon access request from mobile station MS (step 116), SRES is stored in step 222 in the visited MSC/VLR and RAND is transmitted together with certificate CERT in one message from the MSC/VLR to the mobile station in step 220 and 224.

In contrast to the prior art and common GSM authentication procedure, where a 128 bit random number RAND is used, the random number RAND according to the described embodiment of the present invention is n bits shorter than 128 bits. n bits are reserved for the certificate CERT. The certifying algorithm, the certificate key Kᵢ^{cert} and the random number RAND are chosen to match these requirements. As a result the authentication request comprising the authentication challenge RAND the certificate CERT is 128 bits long. In this way the sequence of messages comprising RAND and CERT as transmitted from MSC/VLR to the mobile station MS would have the appearance of randomness and could not be distinguished from prior art 128 bit random number RAND by an unauthorised attacker. A set of random number RAND and certificate CERT is illustrated in Fig. 4 as an example. However, it is appreciated that the certificate CERT may be located anywhere within the sequence of messages comprising RAND and CERT and is not restricted to a location at the end of the sequence. The certificate may for example be included in the sequence while being split into two or more portions, may be distributed in various manners, or may be coded in the random number RAND according to a predetermined procedure. The SIM connected to mobile station MS is provided with the same certifying algorithm and certificate key Kᵢ^{cert} and is thus able to check the message containing the random number RAND and certificate CERT for authentication. The SIM stores the transmitted CERT in step 225. In step 227 the SIM calculates CERT using the transmitted random number RAND and the key Kᵢ^{cert} and certifying algorithm stored in the SIM memory. Subsequently, the stored and the calculate values of CERT are compared (step 229). Referring now to Fig. 3C, if the two values are identical, it is ensured that the authentication challenge is valid and assumed that it was provided by the MSC/VLR. In this case the SIM now continues to respond to the authentication challenge by calculating SRES from Kᵢ and RAND in step 237 and 226 as explained before. If the two values of CERT are not identical, an invalid authentication challenge 21 is detected. In order to provide protection against multiple challenge attacks, it is not sufficient to provide an error message or no response from the SIM card if the two values of CERT are not identical, i.e. an invalid authentication challenge is detected. This would provide potential attackers with a hint that the challenges RAND are not truly random.

In case of an invalid authentication challenge, the SIM uses a second, fake authentication key Kᵢ' to calculate a fake authentication response SRES 233 (step 233 and 226). This second key Ki' is also stored in the memory of the SIM. In both cases, i.e. a valid and invalid authentication challenge, the resulting SRES is transmitted to the MSC/VLR as the authentication result 22 in steps 228 and 230. The procedure of comparing the stored authentication result SRES as received from authentication centre AuC with SRES received from the mobile station and granting or denying access in steps 232, 234 and 236 are the same as in steps 132, 134 and 136 of Fig. 2.

In case an invalid authentication challenge 21 is detected, a flag is set on the SIM indicating that an unauthorised authentication challenge has been detected (step 235).

As explained above, the SIM card returns an authentication response for every challenge, a valid and thus authorised authentication challenge 20 and also an invalid i.e., unauthorised, authentication challenge 21. To further enhance the security provided, it is important that the system performs the same procedure as a response for valid and invalid authentication challenges. In this way a potential attacker would not be able to detect any differences if the SIM card is measured in a card reader or the like. Thus, no hint is given to the potential attacker whether the authentication challenge is valid or not. Otherwise the potential attacker may discover the certifying key Kᵢ^{cert} in a first series of multiple attacks and may continue challenging the SIM using the correct certificate in a second series of attacks in order to discover the authentication key Kᵢ. According to the above-described embodiment of the present invention, however, no hint is given that the attempts are being nullified and that the responses to invalid authentication challenges are meaningless. This method enhances further the security of the authentication system. A potential attacker may well derive the second authentication key Kᵢ', but this is of no use in generating a clone SIM card.

Whilst in the above-described embodiment the method of authorising the authentication challenge is described as a certifying algorithm with a secret key Kᵢ^{cert} as an input parameter, i.e. an authorisation according to the message authentication code (MAC) method, it is appreciated that other possibilities to authorise the authentication challenge like, for example, digital signature or redundancy check codes can be used. By adjusting the length of the keys Kᵢ, Kᵢ^{cert}, of the random number RAND and the certificate CERT it is even possible to use one of the existing GSM algorithms stored on the SIM, for example A₃, as a certifying algorithm. However, it is preferred that the length and appearance of a message containing the authentication challenge RAND and the certificate is the same as for an authentication challenge according to the prior art.

It is appreciated that even other possibilities for authorising the authentication challenge can be used: For example the random number RAND generated by the authentication centre AuC is provided with a predetermined code. Subsequently the message comprising RAND and the code is encrypted with a secret key. A sequence of these encrypted messages would again have the appearance of randomness and could be adjusted to have 128 bit length of prior art authentication challenges, in order not to give a hint to a potential attacker that the authentication challenges carry authorisation certificates. The encrypted message is then transmitted via the visited MSC/VLR to the mobile station and its SIM. The SIM would be provided with the same secret key to decrypt the message. In this way the predetermined code can be checked by the SIM for authorisation of the random number authentication challenge RAND.

Yet another possibility to authorise the authentication challenge is to provide the authentication challenge RAND with a digital signature. The message comprising the random number RAND and the digital signature may be encrypted using the authentication key Kᵢ. Again the ciphering algorithm for encryption of the message and the length of the random number RAND and the digital signature have to be adjusted such that the entire message to be transmitted from the visiting MSC/VLR has the length of the usual authentication challenge and the appearance of randomness. The SIM would be provided with means for decryption of the message and to verify the digital signature.

Moreover, it is appreciated that more than one valid key Kᵢ and/or more than one fake key Kᵢ' (i.e. Kᵢ", Kᵢ"'...) can be stored on the SIM card and can be used to calculate the response for invalid authentication challenges. The different valid keys Kᵢ or fake keys Kᵢ', Kᵢ', etc may, for example, be used alternately if a valid or invalid authentication challenge is detected. Alternatively, one valid or fake key may be selected according to a predetermined selection procedure which may, for example, be based on the random number RAND, the certificate CERT or an external variable parameter.

It if further appreciated that only one authentication key Kᵢ is used, but more than one authentication algorithms A₃, A₃', A₃", ... rather than more than one authentication key Kᵢ are used in the authentication method described.

Whilst in the above-described embodiment the SIM card responds to authentication challenges by performing the same procedure but using an invalid "fake" authentication key or algorithm, it is appreciated that the SIM card may not respond to unauthorised and thus false authentication challenges. In this case the SIM card stores data indicating that an false challenge is detected and consequently the SIM card will not respond to any further authentication challenges by transmitting an authentication response SRES. In this way the possibility of misuse of the SIM card is further reduced.

In a second embodiment of the present invention the authentication centre AuC stores a number of authentication codes Ca. In this embodiment when a subscription is started a number of authentication keys Kᵢ are allocated to the mobile subscriber. There is one authentication key Kᵢ assigned to each possible authentication code for each subscriber in the GSM network.

The database 32 of the authentication centre AuC is further provided with means for randomly choosing or selecting in another way one of the authentication codes. After choosing one of the authentication codes, the AuC retrieves the authentication keys Kᵢ assigned to the chosen authentication code and the authentication centre generates a random number RAND as an authentication challenge. The authentication response SRES is then calculated from the random number RAND and the assigned authentication key Kᵢ fed into an authentication algorithm A₃ as described before. The AuC then sends a message comprising the random number RAND, the authentication code Ca and the authentication response SRES. The random number RAND and the authentication code Ca is sent to the visited MSCNLR and further transmitted to the mobile station as an authentication request. Again a sequence of messages containing RAND and Ca should have the appearance of randomness in order not to alert a potential attacker. In the simplest case the authentication code might for example consist of a 1 bit message with is stored in a predetermined place within a 127 bit random number RAND, such that the message comprising RAND and Ca is the common 128 bit format for authentication challenges according to the GSM standard. In case that Ca is 0 or 1, there is assigned a first authentication key Kᵢ or a second key Kᵢ', respectively, for use in calculating the authentication response SRES.

The SIM card is also provided with the authentication codes, keys and their predetermined assignments as illustrated in Figure 7. The SIM card is provided with information identifying which region of the received authentication request the authentication code Ca is stored. On reception of an authentication challenge from the visited MSC/VLR the SIM card reads the Ca and retrieves the authentication key Kᵢ assigned to the received authentication code Ca from its memory and calculates an authentication response SRES from this assigned authentication key Kᵢ and the received random number RAND. Again SRES is sent as an authentication result to the visited MSC/VLR and there compared to the SRES as received from the AuC. Access is granted if the two authentication results are identical, access is denied if they are not identical. In this way the SIM card is protected against multiple attacks, because it would not be possible to derive the authentication key Kᵢ from challenging the SIM with random number RAND according to the GSM standard and monitoring the authentication responses SRES.

Whilst in the above described embodiment the use of authentication codes are described in response to which one authentication key is chosen, it is appreciated that alternatively a characteristic of the authentication challenge itself may be used. For example a checksum or a cyclic redundancy code may be derived from the random number RAND or portions thereof to determine which authentication key is used. Another possibility is that a portion of predetermined length and position of the authentication challenge itself, for example, the last two bits, determine which authentication key is used. It is further appreciated that one of a number of different authentication algorithms may be used rather than, or in addition, selecting one of a number of different authentication keys.

Whilst in the above-described embodiment an authentication key or algorithm assigned to a received authentication code or a characteristic derived from the authentication challenge is used to generate an authentication response, it is appreciated that alternatively an external variable input parameter may be used to select an authentication key or algorithm. An example for such an external variable parameter is for example the date or a parameter derivable from the TMSI (Temporary Mobile Subscriber Identity) according to a predetermined algorithm.

Whilst in the above-described embodiments an authentication code or characteristic derivable from the authentication challenge is used to select in a predetermined way an authentication key or algorithm, it is appreciated that either the network (i.e. the AuC) or the SIM card may select one of a number of authentication keys or algorithms and respond by generating SRES using this selected key or algorithm. In this case both the AuC and the SIM card are provided with more than one keys or algorithms. Whereas the AuC or the SIM selects one of these keys or algorithms, the according other party (i.e. the SIM card or the AuC) provides more than one authentication responses SRES. The authentication procedure is successful and thus access for the mobile station carrying the SIM is granted if the SRES generating the selected key or algorithms is amongst the number of authentication responses SRES provided by the other party.

It is appreciated that instead of using one authentication algorithm and more than one authentication key alternatively more than one authentication algorithm and one authentication key or more than one authentication algorithm and more than one authentication key may be used.

Whilst in the above-described embodiments an authentication algorithms A₃ according to the GSM standard is used to calculate the signed response SRES, it is appreciated that other authentication algorithms may be used.

Whilst in the above-described embodiments a number of the authentication processing functions on the network side are carried out in the MSC/VLR, one or more of the processing functions may be carried out elsewhere, for example in a base station.

Whilst in the above-described embodiments the method and system of authentication is for authenticating a network entity in the form of a network operator as described in the framework of the GSM standard, it is appreciated that the method and system may also be adapted in other mobile communication systems like for example PCS and for other authentication procedures like the WS and the S scheme. The method and system may also be used for authenticating network entities such as virtual network operators, service providers, etc. The method and system may also be adapted in authentication systems other than mobile communication systems.

## Claims

1. A method of authentication in a mobile communications network comprising:
authentication of a subscriber identifying means to a network entity;
and
authentication of the network entity to the subscriber identifying means,
wherein the subscriber identifying means receives (224) an authentication challenge from the network entity, and
wherein the subscriber identifying means distinguishes (231) authorised authentication challenges from unauthorised authentication challenges,
**characterised in that** a different response (228) to both said authorised (20) and said unauthorised (21) authentication challenges is given by the subscriber identifying means.

2. A method of authentication according to claim 1, wherein said authentication challenges are authorised by adding a certificate (220) to an authentication challenge.

3. A method of authentication according to claim 1 or 2, wherein said authentication of the subscriber identifying means to the network entity includes said subscriber identifying means receiving (224) an authentication challenge, calculating (226) an authentication response from said authentication challenge, an authentication input parameter stored on said subscriber identifying means and an authentication algorithm, and transmitting said authentication response to the network.

4. A method of authentication according to claim 2 or 3, wherein said certificate includes at least one of the following:
i) a digital signature;
ii) a message authentication code (MAC); and
iii) a redundancy check code.

5. A method of authentication according to any of claims 1 to 4, wherein the procedure of responding to said authentication challenge is the same for an authorised and unauthorised authentication challenge and a first input parameter or algorithm is used for said procedure of responding to an authorised authentication challenge, and at least one further input parameter or algorithm, different from said first input parameter or algorithm, is used for said procedure of responding to an unauthorised authentication challenge.

6. A method of authentication according to claim 5, wherein said first and any further input parameter and algorithms are stored on said subscriber identifying means.

7. A method of authentication according to any of claims 1 to 6, further comprising storing data (235) on said subscriber identifying means indicating that said subscriber identifying means has been subject to an unauthorised authentication challenge.

8. A method of authentication according to claim 1, said method comprising the steps of:
receiving a message comprising said authentication challenge and determining a characteristic of said message;
calculating said authentication response based on said authentication challenge, an authentication input parameter and an authentication algorithm;
retrieving one authentication input parameter from a number of input parameters stored on said subscriber identifying means or one authentication algorithm from a number of algorithms stored on said subscriber identifying means in response to said characteristic; and
responding to said authentication challenge by using said retrieved authentication input parameter or algorithm.

9. A method of authentication according to claim 8, wherein said characteristic of said message is derivable from said authentication challenge.

10. A method of authentication according to claim 9, wherein said characteristic is determined using checksums, cyclic redundancy codes or by portions of predetermined length or predetermined position.

11. A method of authentication according to claim 8, wherein said message includes said authentication challenge and an authentication code and said characteristic of said message is included in said authentication code.

12. A method of authentication according to claim 11, comprising the step of selecting one authentication code from a number of different authentication codes, whereby each authentication code is assigned to a particular input parameter or algorithm.

13. A method of authentication according to claim 12, wherein said authentication codes, input parameters or algorithms and assignments of said codes to said input parameter or algorithms are stored on said subscriber identifying means.

14. A method of authentication according to any of claims 1 to 13, wherein a sequence of messages comprising said authentication challenges and said certificates or authentication codes have the appearance of randomness.

15. A method of authentication according to any of claims 1 to 14 for authentication in a mobile communications network, said communications network being in accordance with the GSM standard, wherein said authentication challenge comprises a message of (128-n) bits and said certificate or authentication code comprises a message of n bits, such that a message comprising said authentication challenge and said certificate or authentication codes is 128 bits long.

16. A method of authentication according to any of claims 1 to 15, wherein said subscriber identifying means is a subscriber identity module.

17. Apparatus comprising a subscriber identifying means adapted to:
receive (224) an authentication challenge from a network entity in a mobile communications network; and
distinguish (231) authorised authentication challenges from unauthorised authentication challenges,
**characterised in that**:
the apparatus is adapted to give a different response (228) to both said authorised (20) and said unauthorised (21) authentication challenges.

18. Apparatus according to claim 17, wherein said authentication requests include authentication challenges and responding to said authentication challenges includes calculating (226) an authentication response from said authentication challenge, an authentication input parameter and an authentication algorithm.

19. Apparatus according to claim 18, wherein said authentication challenges carry certificates (220) for authorising said authentication challenges.

20. Apparatus according to claim 19, wherein the validity of said certificate can be checked by calculation (227) of said certificate from a certifying key and a certifying algorithm stored on said information storage means using said authentication challenge as an input parameter and by comparing (229) the calculated and received certificate.

21. Apparatus according to any of claims 17 to 20, said apparatus being adapted to store a first authentication input parameter or algorithm (237) for use in a procedure of responding to authorised requests (20) for authentication and further adapted to store at least another authentication input parameter or algorithm (233) for use in a procedure of responding to unauthorised requests (21).

22. Apparatus according to any of claims 17 to 21, further adapted to store data (235) indicating that said apparatus has been subject to an unauthorised request for authentication.

23. Apparatus for authentication according to claim 17, comprising:
means for calculating authentication responses to received authentication challenges using said challenges, an authentication input parameter and an authentication algorithm stored on said information storage means;
means for:
i) determining characteristics of said authentication challenges;
or
ii) determining characteristics of received authentication codes;
means for storing:
i) an authentication algorithm and at least two secret authentication input parameters; or
ii) a secret authentication input parameter and at least two authentication algorithms;
means for determining predetermined assignments of said characteristics to said at least two authentication input parameters or algorithms; and
means for retrieving the assigned authentication input parameters or algorithms for a particular characteristic or authentication code and using said assigned authentication input parameter or algorithm for calculating said authentication responses.

24. Apparatus according to claim 23, for authentication in a mobile communications network according to a GSM standard, wherein a received message comprising said authentication challenge and said certificate or authentication code have the same appearance as an authentication challenge according to the GSM standard.

25. Apparatus according to any of claims 17 to 24, the apparatus being adapted to distinguish an authorised authentication challenge as transmitted by said network from an unauthorised authentication challenge, wherein said subscriber identifying means is further adapted to store data indicating that said subscriber identifying means has been subject to unauthorised authentication challenges.

## Patentansprüche

1. Verfahren zum Authentifizieren in einem Mobilkommunikationsnetz, wobei das Verfahren Folgendes umfasst:
Authentifizieren eines Teilnehmeridentifizierungsmittels gegenüber einer Netzwerkentität; und
Authentifizieren der Netzwerkentität gegenüber dem Teilnehmeridentifizierungsmittel,
wobei das Teilnehmeridentifizierungsmittel eine Authentifizierungshinterfragung von der Netzwerkentität empfängt (224), und
wobei das Teilnehmeridentifizierungsmittel autorisierte Authentifizierungshinterfragungen von nicht-autorisierten
Authentifizierungshinterfragungen unterscheidet (231),
**dadurch gekennzeichnet, dass** durch das Teilnehmeridentifizierungsmittel eine unterschiedliche Antwort (228) auf die autorisierte (20) und auf die nicht-autorisierte (21) Authentifizierungshinterfragung gegeben wird.

2. Verfahren zum Authentifizieren nach Anspruch 1, wobei die Authentifizierungshinterfragungen durch Hinzufügen eines Zertifikats (220) zu einer Authentifizierungshinterfragung autorisiert werden.

3. Verfahren zum Authentifizieren nach Anspruch 1 oder 2, wobei das Authentifizieren des Teilnehmeridentifizierungsmittels gegenüber der Netzwerkentität beinhaltet, dass das Teilnehmeridentifizierungsmittel Folgendes ausführt: Empfangen (224) einer Authentifizierungshinterfragung, Berechnen (226) einer Authentifizierungsantwort anhand der Authentifizierungshinterfragung, eines in dem Teilnehmeridentifizierungsmittel gespeicherten Authentifizierungseingangsparameters und eines Authentifizierungsalgorithmus, und Senden der Authentifizierungsantwort an das Netzwerk.

4. Verfahren zum Authentifizieren nach Anspruch 2 oder 3, wobei das Zertifikat mindestens eines von Folgendem enthält:
i) eine digitale Signatur;
ii) einen Nachrichtenauthentifizierungscode (Message Authentication Code, MAC); und
iii) einen Redundanzprüfcode.

5. Verfahren zum Authentifizieren nach einem der Ansprüche 1 bis 4, wobei das Verfahren des Antwortens auf die Authentifizierungshinterfragung für eine autorisierte und eine nicht-autorisierte Authentifizierungshinterfragung das gleiche ist und ein erster Eingangsparameter oder Algorithmus für das Verfahren des Antwortens auf eine autorisierte Authentifizierungshinterfragung verwendet wird, und mindestens ein weiterer Eingangsparameter oder Algorithmus, der sich von dem ersten Eingangsparameter oder Algorithmus unterscheidet, für das Verfahren des Antwortens auf eine nicht-autorisierte Authentifizierungshinterfragung verwendet wird.

6. Verfahren zum Authentifizieren nach Anspruch 5, wobei der erste und jeder weitere Eingangsparameter und der erste und alle weiteren Algorithmen in dem Teilnehmeridentifizierungsmittel gespeichert werden.

7. Verfahren zum Authentifizieren nach einem der Ansprüche 1 bis 6, das des Weiteren das Speichern von Daten (235) in dem Teilnehmeridentifizierungsmittel umfasst, was anzeigt, dass das Teilnehmeridentifizierungsmittel einer nicht-autorisierten Authentifizierungshinterfragung unterzogen wurde.

8. Verfahren zum Authentifizieren nach Anspruch 1, wobei das Verfahren folgende Schritte umfasst:
Empfangen einer Nachricht, die die Authentifizierungshinterfragung umfasst, und Bestimmen eines Charakteristikums der Nachricht;
Berechnen der Authentifizierungsantwort auf der Basis der Authentifizierungshinterfragung, eines Authentifizierungseingangsparameters und eines Authentifizierungsalgorithmus;
Abrufen eines einzelnen Authentifizierungseingangsparameters aus einer Anzahl von in dem Teilnehmeridentifizierungsmittel gespeicherten Eingangsparametern oder eines einzelnen Authentifizierungsalgorithmus aus einer Anzahl von in dem Teilnehmeridentifizierungsmittel gespeicherten Algorithmen in Reaktion auf das Charakteristikum; und
Antworten auf die Authentifizierungshinterfragung unter Verwendung des abgerufenen Authentifizierungseingangsparameters oder Algorithmus.

9. Verfahren zum Authentifizieren nach Anspruch 8, wobei das Charakteristikum der Nachricht aus der Authentifizierungshinterfragung abgeleitet werden kann.

10. Verfahren zum Authentifizieren nach Anspruch 9, wobei das Charakteristikum unter Verwendung von Prüfsummen, zyklischen Redundanzcodes oder durch Abschnitte von zuvor festgelegter Länge oder zuvor festgelegter Position bestimmt wird.

11. Verfahren zum Authentifizieren nach Anspruch 8, wobei die Nachricht die Authentifizierungshinterfragung und einen Authentifizierungscode enthält und das Charakteristikum der Nachricht in dem Authentifizierungscode enthalten ist.

12. Verfahren zum Authentifizieren nach Anspruch 11, das den Schritt des Auswählens eines einzelnen Authentifizierungscodes aus einer Anzahl verschiedener Authentifizierungscodes umfasst, wobei jeder Authentifizierungscode einem bestimmten Eingangsparameter oder Algorithmus zugewiesen ist.

13. Verfahren zum Authentifizieren nach Anspruch 12, wobei die Authentifizierungscodes, Eingangsparameter oder Algorithmen und Zuweisungen der Codes zu den Eingangsparametern oder Algorithmen in dem Teilnehmeridentifizierungsmittel gespeichert werden.

14. Verfahren zum Authentifizieren nach einem der Ansprüche 1 bis 13, wobei eine Sequenz von Nachrichten, die die Authentifizierungshinterfragungen umfassen, und die Zertifikate oder Authentifizierungscodes den Anschein der Zufälligkeit haben.

15. Verfahren zum Authentifizieren nach einem der Ansprüche 1 bis 14 zum Authentifizieren in einem Mobilkommunikationsnetz, wobei das Kommunikationsnetz nach dem GSM-Standard arbeitet, wobei die Authentifizierungshinterfragung eine Nachricht von (128-n) Bits umfasst und das Zertifikat oder der Authentifizierungscode eine Nachricht von n Bits umfasst, dergestalt, dass eine Nachricht, die die Authentifizierungshinterfragung und das Zertifikat oder die Authentifizierungscodes umfasst, 128 Bits lang ist.

16. Verfahren zum Authentifizieren nach einem der Ansprüche 1 bis 15, wobei das Teilnehmeridentifizierungsmittel ein Teilnehmeridentitätsmodul ist.

17. Vorrichtung, die ein Teilnehmeridentifizierungsmittel umfasst, das für Folgendes ausgelegt ist:
Empfangen (224) einer Authentifizierungshinterfragung von einer Netzwerkentität in einem Mobilkommunikationsnetz;
und
Unterscheiden (231) autorisierter Authentifizierungshinterfragungen von nicht-autorisierten Authentifizierungshinterfragungen,
**dadurch gekennzeichnet, dass**:
die Vorrichtung dafür ausgelegt ist, auf die autorisierten (20) und auf die nicht-autorisierten (21) Authentifizierungshinterfragungen eine unterschiedliche Antwort zu geben (228).

18. Vorrichtung nach Anspruch 17, wobei die Authentifizierungsanforderungen Authentifizierungshinterfragungen enthalten und das Antworten auf die Authentifizierungshinterfragungen das Berechnen (226) einer Authentifizierungsantwort anhand der Authentifizierungshinterfragung, eines Authentifizierungseingangsparameters und eines Authentifizierungsalgorithmus enthält.

19. Vorrichtung nach Anspruch 18, wobei die Authentifizierungshinterfragungen Zertifikate (220) zum Autorisieren der Authentifizierungshinterfragungen transportieren.

20. Vorrichtung nach Anspruch 19, wobei die Gültigkeit des Zertifikats durch Berechnen (227) des Zertifikats anhand eines Zertifizierungsschlüssels und eines Zertifizierungsalgorithmus, die in dem Informationsspeichermittel gespeichert sind, unter Verwendung der Authentifizierungshinterfragung als einen Eingangsparameter und durch Vergleichen (229) des berechneten und des empfangenen Zertifikats überprüft werden kann.

21. Vorrichtung nach einem der Ansprüche 17 bis 20, wobei die Vorrichtung dafür ausgelegt ist, einen ersten Authentifizierungseingangsparameter oder Algorithmus (237) zur Verwendung in einem Verfahren zum Antworten auf autorisierte Anforderungen (20) einer Authentifizierung zu speichern, und des Weiteren dafür ausgelegt ist, mindestens einen weiteren Authentifizierungseingangsparameter oder -algorithmus (233) zur Verwendung in einem Verfahren zum Antworten auf nicht-autorisierte Anforderungen (21) zu speichern.

22. Vorrichtung nach einem der Ansprüche 17 bis 21, die des Weiteren dafür ausgelegt ist, Daten zu speichern (235), die anzeigen, dass die Vorrichtung einer nicht-autorisierten Anforderung einer Authentifizierung unterzogen wurde.

23. Vorrichtung zum Authentifizieren nach Anspruch 17, die Folgendes umfasst:
ein Mittel zum Berechnen von Authentifizierungsantworten auf empfangene Authentifizierungshinterfragungen unter Verwendung der Hinterfragungen, eines Authentifizierungseingangsparameters und eines Authentifizierungsalgorithmus, der in dem Informationsspeichermittel gespeichert ist;
ein Mittel zum:
i) Bestimmen von Charakteristika der Authentifizierungshinterfragungen; oder
ii) Bestimmen von Charakteristika empfangener
Authentifizierungscodes;
ein Mittel zum Speichern:
i) eines Authentifizierungsalgorithmus und mindestens zweier geheimer Authentifizierungseingangsparameter; oder
ii) eines geheimen Authentifizierungseingangsparameters und mindestens zweier Authentifizierungsalgorithmen;
ein Mittel zum Bestimmen zuvor festgelegter Zuweisungen der Charakteristika zu den mindestens zwei Authentifizierungseingangsparametern oder -algorithmen; und
ein Mittel zum Abrufen der zugewiesenen Authentifizierungseingangsparameter oder -algorithmen für ein bestimmtes Charakteristikum oder einen bestimmten Authentifizierungscode und Verwenden des zugewiesenen Authentifizierungseingangsparameters oder -algorithmus zum Berechnen der Authentifizierungsantworten.

24. Vorrichtung nach Anspruch 23 zum Authentifizieren in einem Mobilkommunikationsnetz gemäß einem GSM-Standard, wobei eine empfangene Nachricht, die die Authentifizierungshinterfragung umfasst, und das Zertifikat oder der Authentifizierungscode das gleiche Aussehen wie eine Authentifizierungshinterfragung gemäß dem GSM-Standard haben.

25. Vorrichtung nach einem der Ansprüche 17 bis 24, wobei die Vorrichtung dafür ausgelegt ist, eine durch das Netzwerk gesendete autorisierte Authentifizierungshinterfragung von einer nicht-autorisierten Authentifizierungshinterfragung zu unterscheiden, wobei das Teilnehmeridentifizierungsmittel des Weiteren dafür ausgelegt ist, Daten zu speichern, die anzeigen, dass das Teilnehmeridentifizierungsmittel nicht-autorisierten Authentifizierungshinterfragungen unterzogen wurde.

## Revendications

1. Procédé d'authentification dans un réseau de communication mobile, consistant à :
authentifier un moyen d'identification d'abonné auprès d'une entité réseau ; et
authentifier l'entité réseau auprès du moyen d'identification d'abonné,
dans lequel le moyen d'identification d'abonné reçoit (224) un défi d'authentification provenant de l'entité réseau, et
dans lequel le moyen d'identification d'abonné distingue (231) les défis d'authentification autorisés des défis d'authentification non autorisés,
ledit procédé étant **caractérisé en ce qu'**une réponse différente (228) auxdits deux défis d'authentification autorisés (20) et non autorisés (21) est donnée par le moyen d'identification d'abonné.

2. Procédé d'authentification selon la revendication 1, dans lequel lesdits défis d'authentification sont autorisés en ajoutant un certificat (220) à un défi d'authentification.

3. Procédé d'authentification selon la revendication 1 ou 2, dans lequel ladite authentification du moyen d'identification d'abonné auprès de l'entité réseau consiste à recevoir (224) un défi d'authentification par ledit moyen d'identification d'abonné, calculer (226) une réponse d'authentification à partir dudit défi d'authentification, d'un paramètre d'entrée d'authentification stocké sur ledit moyen d'identification d'abonné, et d'un algorithme d'authentification, et transmettre ladite réponse d'authentification au réseau.

4. Procédé d'authentification selon la revendication 2 ou 3, dans lequel ledit certificat comprend au moins l'un des éléments suivants :
i) une signature numérique ;
ii) un code d'authentification de message (MAC) ;
et
iii) un code de contrôle de redondance.

5. Procédé d'authentification selon l'une quelconque des revendications 1 à 4, dans lequel la procédure de réponse audit défi d'authentification est la même pour un défi d'authentification autorisé et non autorisé, un premier paramètre d'entrée ou algorithme étant utilisé pour ladite procédure de réponse à un défi d'authentification autorisé, et au moins un autre paramètre d'entrée ou algorithme, différent dudit premier paramètre d'entrée ou algorithme, est utilisé pour ladite procédure de réponse à un défi d'authentification non autorisé.

6. Procédé d'authentification selon la revendication 5, dans lequel ledit premier et l'autre quelconque paramètre d'entrée et algorithme sont stockés sur ledit moyen d'identification d'abonné.

7. Procédé d'authentification selon l'une quelconque des revendications 1 à 6, consistant en outre à stocker des données (235) sur ledit moyen d'identification d'abonné indiquant que ledit moyen d'identification d'abonné a été soumis à un défi d'authentification non autorisé.

8. Procédé d'authentification selon la revendication 1, ledit procédé comprenant les étapes consistant à :
recevoir un message comprenant ledit défi d'authentification, et déterminer une caractéristique dudit message ;
calculer ladite réponse d'authentification sur la base dudit défi d'authentification, d'un paramètre d'entrée d'authentification et d'un algorithme d'authentification ;
récupérer un paramètre d'entrée d'authentification à partir d'un certain nombre de paramètres d'entrée stockés sur ledit moyen d'identification d'abonné, ou un algorithme d'authentification à partir d'un certain nombre d'algorithmes stockés sur ledit moyen d'identification d'abonné en réponse à ladite caractéristique ; et
répondre audit défi d'authentification en utilisant ledit paramètre d'entrée ou algorithme d'authentification récupéré.

9. Procédé d'authentification selon la revendication 8, dans lequel ladite caractéristique dudit message peut être obtenue à partir dudit défi d'authentification.

10. Procédé d'authentification selon la revendication 9, dans lequel ladite caractéristique est déterminée au moyen de sommes de contrôle, de codes de redondance cyclique ou de parties de longueur prédéterminée ou de position prédéterminée.

11. Procédé d'authentification selon la revendication 8, dans lequel ledit message inclut ledit défi d'authentification et un code d'authentification, et ladite caractéristique dudit message est incluse dans ledit code d'authentification.

12. Procédé d'authentification selon la revendication 11, comprenant l'étape consistant à sélectionner un code d'authentification parmi un certain nombre de codes d'authentification différents, chaque code d'authentification étant ainsi affecté à un paramètre d'entrée ou algorithme particulier.

13. Procédé d'authentification selon la revendication 12, dans lequel lesdits codes d'authentification, lesdits paramètres d'entrée ou algorithmes, et lesdites affectations desdits codes auxdits paramètres d'entrée ou algorithmes sont stockés sur ledit moyen d'identification d'abonné.

14. Procédé d'authentification selon l'une quelconque des revendications 1 à 13, dans lequel une séquence de messages comprenant lesdits défis d'authentification et lesdits certificats ou codes d'authentification a l'apparence d'un Caractère aléatoire.

15. Procédé d'authentification selon l'une quelconque des revendications 1 à 14 servant à l'authentification dans un réseau de communication mobile, ledit réseau de communication mobile étant en conformité avec la norme GSM, dans lequel ledit défi d'authentification comprend un message de (128-n) bits, et ledit certificat ou code d'authentification comprend un message de n bits, de telle sorte qu'un message comprenant ledit défi d'authentification et ledit certificat ou code d'authentification ait une longueur de 128 bits.

16. Procédé d'authentification selon l'une quelconque des revendications 1 à 15, dans lequel ledit moyen d'identification d'abonné est un module d'identité d'abonné.

17. Appareil comprenant un moyen d'identification d'abonné conçu pour :
recevoir (224) un défi d'authentification provenant d'une entité réseau dans un réseau de communication mobile ; et
distinguer (231) les défis d'authentification autorisés des défis d'authentification non autorisés,
**caractérisé en ce que** :
l'appareil est conçu pour donner une réponse différente (228) auxdits deux défis d'authentification autorisés (20) et non autorisés (21).

18. Appareil selon la revendication 17, dans lequel lesdites demandes d'authentification comprennent des défis d'authentification, et la réponse auxdits défis d'authentification consiste à calculer (226) une réponse d'authentification à partir dudit défi d'authentification, d'un paramètre d'entrée d'authentification et d'un algorithme d'authentification.

19. Appareil selon la revendication 18, dans lequel lesdits défis d'authentification transportent des certificats (220) servant à l'autorisation desdits défis d'authentification.

20. Appareil selon la revendication 19, dans lequel la validité dudit certificat peut être vérifiée en calculant (227) ledit certificat à partir d'une clé de certification et d'un algorithme de certification stockés sur ledit moyen de stockage d'informations au moyen dudit défi d'authentification en guise de paramètre d'entrée, et en comparant (229) le certificat calculé et reçu.

21. Appareil selon l'une quelconque des revendications 17 à 20, ledit appareil étant conçu pour stocker un premier paramètre d'entrée ou algorithme d'authentification (237) destiné à être utilisé dans une procédure de réponse à des demandes autorisées (20) à des fins d'authentification, et étant conçu en outre pour stocker au moins un autre paramètre d'entrée ou algorithme d'authentification (233) destiné à être utilisé dans une procédure de réponse à des demandes non autorisées (21).

22. Appareil selon l'une quelconque des revendications 17 à 21, conçu en outre pour stocker des données (235) indiquant que ledit appareil a été soumis à une demande d'authentification non autorisée.

23. Appareil d'authentification selon la revendication 17, comprenant :
un moyen servant à calculer des réponses d'authentification aux défis d'authentification reçus au moyen desdits défis, d'un paramètre d'entrée d'authentification et d'un algorithme d'authentification stockés sur ledit moyen de stockage d'informations ;
un moyen servant à :
i) déterminer les caractéristiques desdits défis d'authentification ; ou
ii) déterminer les caractéristiques des codes d'authentification reçus ;
un moyen servant à stocker :
i) un algorithme d'authentification et au moins deux paramètres d'entrée d'authentification secrets ; ou
ii) un paramètre d'entrée d'authentification secret et au moins deux algorithmes d'authentification ;
un moyen servant à déterminer des affectations prédéterminées desdites caractéristiques auxdits au moins deux paramètres d'entrée ou algorithmes d'authentification ; et
un moyen servant à récupérer les paramètres d'entrée ou algorithmes d'authentification affectés à un(e) caractéristique ou code d'authentification particulier, et à utiliser ledit paramètre d'entrée ou algorithme d'authentification affecté pour calculer lesdites réponses d'authentification.

24. Appareil selon la revendication 23 servant à l'authentification dans un réseau de communication mobile conforme à une norme GSM, dans lequel un message reçu comprenant ledit défi d'authentification et ledit certificat ou code d'authentification a la même apparence qu'un défi d'authentification conforme à la norme GSM.

25. Appareil selon l'une quelconque des revendications 17 à 24, l'appareil étant conçu pour distinguer un défi d'authentification autorisé comme étant transmis par ledit réseau d'un défi d'authentification non autorisé, dans lequel ledit moyen d'identification d'abonné est en outre conçu pour stocker des données indiquant que ledit moyen d'identification d'abonné a été soumis à des défis d'authentification non autorisés.
